# EUROPEAN PATENT SPECIFICATION

(11) **EP 3 279 586 B1**
(45) Date of publication and mention of the grant of the patent: **24.04.2019**
(21) Application number: 16792682.3
(22) Date of filing: 10.05.2016
(51) Int. Cl.: F25B 7/00, F25B 9/14, F25B 25/00, F25B 6/04, F25B 40/00, F25B 41/06

(54) **REFRIGERATING DEVICE**
KÜHLVORRICHTUNG
DISPOSITIF FRIGORIFIQUE

(30) Priority: 14.05.2015 JP 2015099398
(43) Date of publication of application: 07.02.2018
(73) Proprietor: PHC Holdings Corporation, Tokyo 105-8433 (JP)
(72) Inventor: SATO, Hiroyuki, Minato-ku Tokyo 105-8433 (JP); OTSUKI, Takao, Minato-ku Tokyo 105-8433 (JP); KOBAYASHI, Susumu, Minato-ku Tokyo 105-8433 (JP)
(74) Representative: Grünecker Patent- und Rechtsanwälte PartG mbB
(86) International application number: PCT/JP2016/063837
(87) International publication number: WO 2016/181957

(56) References cited:
- WO-A2-2011/037340
- DE-A1-102009 019 799
- JP-A- 2002 013 885
- JP-A- 2005 016 740
- JP-A- 2008 064 363
- JP-A- 2008 064 363
- US-A1- 2010 018 224
- US-B1- 6 415 611

## Description

### [TECHNICAL FIELD]

The present invention relates to refrigeration devices, and, more particularly, to a refrigeration device adapted to condense a refrigerant discharged from a compressor and cool a target by evaporating the refrigerant in an evaporator.

### [BACKGROUND ART]

Refrigeration devices provided with two independent systems of refrigerant circuits and configured to exchange heat between the evaporator of the high-temperature side refrigerant circuit and the condenser of the low-temperature side refrigerant circuit, i.e., refrigeration devices of so-called binary refrigeration system, have been known in the related art (see, for example, patent document 1). Document US-A-6 415 611 discloses a refrigeration device according to the preamble of claim1.
[patent document 1] JP2006-170487

### [PROBLEM TO BE SOLVED BY THE INVENTION]

We have made rigorous study on the aforementioned refrigeration devices and found out that there is room for simplification of the related-art refrigeration devices.

In this background, a general purpose of the present invention is to provide a technology for simplifying the structure of refrigeration devices.

### [MEANS TO SOLVE THE PROBLEM]

An embodiment of the present invention that addresses the above issue relates to a refrigeration device. The refrigeration device according to the invention is defined in the independent claims. Further advantageous embodiments are defined in the dependent claims.

### [ADVANTAGE OF THE INVENTION]

The present invention provides a technology for simplifying the structure of refrigeration devices.

### [BRIEF DESCRIPTION OF THE DRAWINGS]

Fig. 1 is a refrigerant circuit diagram of the refrigeration device according to the embodiment;
Fig. 2 is a cross sectional view schematically showing the structure of an exemplary regenerative refrigerator;
Fig. 3 is a front view schematically showing the appearance of the refrigeration device according to the embodiment;
Fig. 4A is a front view schematically showing the appearance of the refrigeration device according to variation 1; and
Fig. 4B schematically shows the neighborhood of the condenser in the refrigerant circuit of the refrigeration device according to variation 2.

### [MODE FOR CARRYING OUT THE INVENTION]

The present invention will be described based on preferred embodiments with reference to the drawings. The same or equivalent constituting elements, members, and processes shown in the drawings shall be denoted by the same reference numerals, and duplicative explanations will be omitted appropriately. The embodiments shall not limit the invention but serve illustrative purposes. Not all of the features and combinations thereof described in the embodiment are necessarily essential to the invention. The scales and shapes shown in the figures are defined for convenience's sake to make the explanation easy and shall not be interpreted limitatively unless otherwise specified. Terms like "first", "second", etc. used in the specification and claims do not indicate an order or importance by any means and are used to distinguish a certain feature from the others.

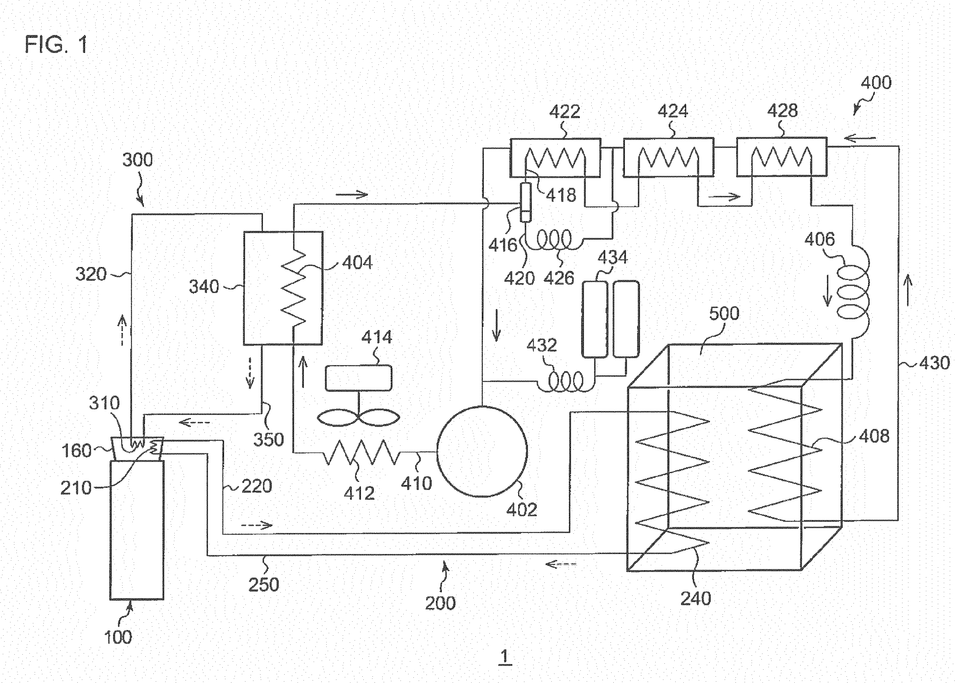

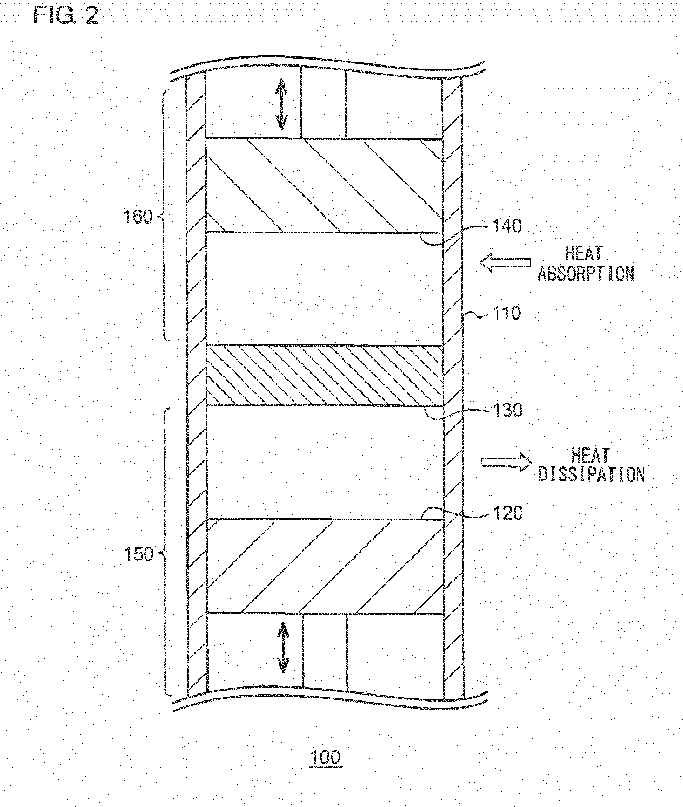

The refrigeration device according to the embodiment is capable of cooling the interior of a storage chamber to an extremely low temperature of about -150°. The refrigeration device according to the embodiment is configured as a combination of a regenerative refrigerator and a refrigerant circuit. In essence, the refrigeration device is configured such that the high-temperature side refrigerant circuit in a binary refrigeration device is replaced by a regenerative refrigerator. Fig. 1 is a refrigerant circuit diagram of the refrigeration device according to the embodiment. Fig. 2 is a cross sectional view schematically showing the structure of an exemplary regenerative refrigerator.

The refrigeration device 1 according to the embodiment includes a regenerative refrigerator 100, a first thermal siphon 200, a second thermal siphon 300, a refrigerant circuit 400, and storage chamber 500. A description will now be given of the feature of each unit.

The regenerative refrigerator 100 is a refrigerator for cooling a condenser 404 of the refrigerant circuit 400. The regenerative refrigerator 100 is exemplified by a Gifford-McMahon (GM) refrigerator, a pulse tube refrigerator, a Stirling refrigerator, a Solvay refrigerator, a Claude cycle refrigerator, etc. Preferably, the regenerative refrigerator 100 is a Stirling refrigerator.

As shown in Figs. 1 and 2, the regenerative refrigerator 100 includes a chamber 110, a movable member 120, a regenerator 130, and a movable member 140. The chamber 110 is, for example, a cylinder. The chamber 110 is filled with a working fluid such as helium gas. The working fluid is hermetically stored in the chamber 110. The movable members 120, 140 are configured as, for example, a piston and are capable of moving inside the chamber 110 reciprocally. The regenerator 130 is placed inside the chamber 110 between the movable member 120 and the movable member 140. Regenerator 130 is provided with, for example, a laminated structure of metallic gauge.

The regenerative refrigerator 100 includes a heat dissipation portion 150 and a heat absorption portion 160 sandwiching the regenerator 130. The heat dissipation portion 150 is, stated differently, a compression portion or a high-temperature portion. The heat absorption portion 160 is, stated differently, an expansion portion or a low-temperature portion. For example, the refrigeration cycle of the regenerative refrigerator 100 is as follows.

First, the working fluid is compressed as a result of the movable member 120 moving in the heat dissipation portion 150 in a direction approaching the regenerator 130 (compression stroke). The heat generated by the compression of the working fluid is dissipated via a heat dissipation fin (not shown) provided around the chamber 110. Subsequently, the movable member 120 and the movable member 140 move, maintaining the volume therebetween. In this process, the movable member 120 moves in a direction approaching the regenerator 130, and the movable member 140 moves in a direction away from the regenerator 130. This causes the working fluid to pass through the regenerator 130, maintaining a high pressure, and moves toward the side of the heat absorption portion 160 as it is cooled by the regenerator 130 (precooling stroke).

Subsequently, the working fluid compressed in the heat dissipation portion 150 is expanded as a result of the movable member 140 moving in the heat absorption portion 160 in a direction away from the regenerator 130 (expansion stroke). Expansion of the working fluid deprives the heat around the heat absorption portion 160. Subsequently, the movable member 120 moves in a direction away from the regenerator 130, and the movable member 140 moves in a direction approaching the regenerator 130. This causes the working fluid to pass through the regenerator 130 and move toward the heat dissipation portion 150 as it cools the regenerator 130 (temperature-raising stroke). The strokes above complete one cycle.

The regenerative refrigerator 100 according to the embodiment has a structure in which a high-temperature side compression portion is placed at one end and a low-temperature side expansion portion is placed at the other end, sandwiching the regenerator 130. The structure is not limited to this and other common regenerative refrigerators may be used. A Joule Thomson refrigerator may be used in place of a regenerative refrigerator.

The second thermal siphon 300 is a device for cooling a target of cooling by using the vaporization heat of a refrigerant and mediates heat exchange between the heat absorption portion 160 of the regenerative refrigerator 100 and the condenser 404 of the refrigerant circuit 400. The second thermal siphon 300 includes a second condensation unit 310, a second liquid line 320, a second evaporation unit 340, and a second gas line 350.

The second condensation unit 310 exchanges heat with the heat absorption portion 160 of the regenerative refrigerator 100. This causes the refrigerant in the second condensation unit 310 to be cooled and turned into a liquid. A refrigerant gas such as R508A, ethane, etc. may be used as the refrigerant. One end of the second liquid line 320 is connected to the second condensation unit 310. The second liquid line 320 is formed of a pipe of a smaller diameter than that of the second gas line 350. The other end of the second liquid line 320 is connected to the second evaporation unit 340. The refrigerant turned into a liquid in the second condensation unit 310 flows into the second evaporation unit 340 via the second liquid line 320. The second liquid line 320 is of a smaller diameter than the second gas line 350 and has a smaller flow passage area. This inhibits a reversed flow of the gas vaporized in the second evaporation unit 340 toward the second condensation unit 310. The refrigerant in the second thermal siphon 300 is turned into a liquid in the second condensation unit 310 and is reduced in volume. Therefore, no trouble is caused in the distribution of the refrigerant even if the second liquid line 320 is configured to have a small diameter. The entirety of the second thermal siphon 300 may be formed by a pipe of the same inner diameter and the flow passage area of the second liquid line 320 may be reduced by partially extending a core through the pipe.

The second evaporation unit 340 is configured to be capable of exchanging heat with the condenser 404 of the refrigerant circuit 400. In this embodiment, the second evaporation unit 340 and the condenser 404 form a cascade heat exchanger. The refrigerant flowing into the second evaporation unit 340 absorbs heat from the refrigerant flowing in the condenser 404 and evaporates. Evaporation of the refrigerant cools the refrigerant in the condenser 404. The second evaporation unit 340 is capable of cooling the refrigerant in the condenser 404 to, for example, about -60°C ∼ -40°C.

One end of the second gas line 350 is connected to the second evaporation unit 340. The other end of the second gas line 350 is connected to the second condensation unit 310. The refrigerant turned into a gas in the second evaporation unit 340 flows into the second condensation unit 310 via the second gas line 350. The refrigerant is cooled in the second condensation unit 310 and is turned into a liquid again.

The refrigerant circuit 400 is provided with a compressor 402, a condenser 404, a capillary tube 406 as a decompressor, and an evaporator 408 as main features. These components are connected circularly in the stated order. For example, the compressor 402 is an electric compressor employing a uniphase or triphase AC power source. A refrigerant discharge pipe 410 is connected to the compressor 402. The refrigerant discharge pipe 410 is connected to an auxiliary condenser 412. The auxiliary condenser 412 is cooled by an air blower 414.

The auxiliary condenser 412 is connected to the condenser 404. The condenser 404 forms a cascade heat exchanger along with the second evaporation unit 340 of the second thermal siphon 300. The refrigerant of the refrigerant circuit 400 exchanges heat with the refrigerant in the second evaporation unit 340 in the condenser 404. This causes the condenser 404 and the heat absorption portion 160 of the regenerative refrigerator 100 to exchange heat and cools the refrigerant in the condenser 404. The condenser 404 is connected to a vapor-liquid separator 416.

A vapor phase pipe 418 and a liquid phase pipe 420 are connected to the vapor-liquid separator 416. The vapor phase pipe 418 is a pipe to retrieve the uncondensed vapor phase refrigerant separated by the vapor-liquid separator 416. The liquid phase pipe 420 is a pipe to retrieve the condensed liquid phase refrigerant separated by the vapor-liquid separator 416. The vapor phase pipe 418 is connected to a second intermediate heat exchanger 424 via a first intermediate heat exchanger 422. The liquid phase pipe 420 is connected to the first intermediate heat exchanger 422 via a capillary tube 426. The first intermediate heat exchanger 422 has the function of cooling and condensing the vapor phase refrigerant flowing in the vapor phase pipe 418 by the evaporation of the liquid phase refrigerant decompressed in the capillary tube 426.

The second intermediate heat exchanger 424 is connected to a third intermediate heat exchanger 428. The third intermediate heat exchanger 428 is connected to the capillary tube 406 as a decompressor. The second intermediate heat exchanger 424 and the third intermediate heat exchanger 428 are heat exchangers for exchanging heat with the refrigerant directed toward the capillary tube 406 and the refrigerant returning from the evaporator 408 to the compressor 402.

The capillary tube 406 is connected to the evaporator 408. The evaporator 408 is configured to be capable of exchanging heat with the interior of the storage chamber 500. For example, the evaporator 408 is mounted on the outer wall surface of the storage chamber 500. The evaporator 408 is connected to a suction pipe 430. The suction pipe 430 is connected to the suction side of the compressor 402 via the third intermediate heat exchanger 428, the second intermediate heat exchanger 424, and the first intermediate heat exchanger 422. An expansion tank 434 is connected to the suction pipe 430 via the capillary tube 432 between the first intermediate heat exchanger 422 and the compressor 402. The expansion tank 434 is a tank for storing the refrigerant when the compressor 402 ceases to operate.

A mixture of four types of refrigerants with different boiling points is enclosed as the refrigerant in the refrigerant circuit 400. More specifically, a non-azeotropic mixed refrigerant containing R508A, R14, R50, and R740 are enclosed. R508A is composed of R23 (trifluoromethane: CHF₃) and R116 (hexafluoroethane: CF₃CF₃). The composition contains R23 in an amount of 39 weight % and R116 in an amount of 61 weight %. The boiling point of R508A is -85.7°C. R14 is tetrafluoromethane (CF₄) and the boiling point is -127.9°C. R50 is methane (CH₄) and the boiling point is -161.5°C. R740 is argon (Ar) and the boiling point is -185.86°C. R508B may be used in place of R508A. Alternatively, a singular refrigerant of R23, R116, or R117 or a mixture of two or more refrigerants may be used.

For example, the refrigerant is enclosed in the refrigerant circuit 400 through the following steps. First, R14 and R50 are pre-mixed and turned into an inflammable state. Then, R508A, a mixture of refrigerants R14 and R50, and R740 are pre-mixed and enclosed in the refrigerant circuit 400. Alternatively, the refrigerants are enclosed in the descending order of boiling points.

A description will now be given of circulation of the refrigerant in the refrigerant circuit 400. First, the refrigerant is compressed in the compressor 402 and is turned into a high-temperature gaseous refrigerant. The refrigerant is discharged to the refrigerant discharge pipe 410 and flows into the condenser 404 after being cooled by the auxiliary condenser 412. The refrigerant flowing into the condenser 404 is cooled by exchanging heat with the second evaporation unit 340. The refrigerant in the condenser 404 is cooled to about -60°C ∼ -40°C. This condenses R508A in the refrigerant. The refrigerant passing through the condenser 404 flows into the vapor-liquid separator 416. At this point of time, R14, R50, and R740 remain uncondensed and are in a gaseous state. Therefore, R508A is mainly discharged to the liquid phase pipe 420, and R14, R50, and R740 are mainly discharged to the vapor phase pipe 418, respectively, in the vapor-liquid separator 416.

The refrigerant flowing into the liquid phase pipe 420 is decompressed by the capillary tube 426 and flows into the first intermediate heat exchanger 422. The refrigerant flowing into the vapor phase pipe 418 is cooled in the first intermediate heat exchanger 422 by the evaporation of the refrigerant decompressed in the capillary tube 426. The refrigerant is also cooled by exchanging heat with the refrigerant returning from the evaporator 408. This results in an intermediate temperature of the first intermediate heat exchanger 422 of about -95° so that R14 in the vapor phase pipe 418 is condensed. R50 and R740 continue to remain in a gaseous state. The refrigerant passing through the first intermediate heat exchanger 422 flows into the second intermediate heat exchanger 424. The intermediate temperature of the intermediate heat exchanger means the temperature of the pipe at the center of the intermediate heat exchanger.

The refrigerant flowing into the second intermediate heat exchanger 424 is cooled by exchanging heat with the refrigerant returning from the evaporator 408 and flows into the third intermediate heat exchanger 428. The refrigerant flowing into the third intermediate heat exchanger 428 is cooled by exchanging heat with the refrigerant returning from the evaporator 408 and flows into the capillary tube 406. Heat exchange in the second intermediate heat exchanger 424 and the third intermediate heat exchanger 428 cools the refrigerant and condenses R50 and R740. R50 is mainly condensed in the second intermediate heat exchanger 424 and R740 is mainly condensed in the third intermediate heat exchanger 428. The intermediate temperature of the second intermediate heat exchanger 424 is about -110°C and the intermediate temperature of the third intermediate heat exchanger 428 is about -140°C.

The refrigerant is decompressed in the capillary tube 406 and flows into the evaporator 408. The refrigerant deprives the heat from around and evaporates in the evaporator 408. This allows the cooling effect of the refrigerant to take place and the environment around the evaporator 408 is cooled to an extremely low temperature of about -160°C ∼ -157°C. Cooling of the evaporator 408 cools interior of the storage chamber 500 to a temperature of about -150°C. Thus, an extremely low temperature can be achieved in the evaporator 408 in the final stage of the refrigerant circuit 400 by condensing the refrigerant in the vapor phase successively, using differences in boiling points of the refrigerants.

The refrigerant evaporated in the evaporator 408 is discharged to the suction pipe 430 and flows into the third intermediate heat exchanger 428, the second intermediate heat exchanger 424, and the first intermediate heat exchanger 422 successively. The refrigerator passing through the first intermediate heat exchanger 422 converges with the refrigerant evaporated in the first intermediate heat exchanger 422 and returns to the compressor 402.

The compressor 402 is switched ON and OFF by a controller (not shown) based on the temperature inside the storage chamber 500. When the controller stops the operation of the compressor 402, the refrigerant is collected in the expansion tank 434. When the operation of the compressor 402 is started by the controller, the refrigerant in the expansion tank 434 is returned to the compressor 402 via the capillary tube 432.

The first thermal siphon 200 is a device for cooling a target of cooling by using the vaporization heat of a refrigerant and mediates heat exchange between the heat absorption portion 160 of the regenerative refrigerator 100 and the interior of the storage chamber 500. The first thermal siphon 200 includes a first condensation unit 210, a first liquid line 220, a first evaporation unit 240, and a first gas line 250.

The first condensation unit 210 exchanges heat with the heat absorption portion 160 of the regenerative refrigerator 100. This causes the refrigerant in the first condensation unit 210 to be cooled and turned into a liquid. A refrigerant gas such as R508A, ethane, etc. may be used as the refrigerant. One end of the first liquid line 220 is connected to the first condensation unit 210. The first liquid line 220 is formed of a pipe of a smaller diameter than that of the first gas line 250. The other end of the first liquid line 220 is connected to the first evaporation unit 240. The refrigerant turned into a liquid in the first condensation unit 210 flows into the first evaporation unit 240 via the first liquid line 220. The first liquid line 220 is of a smaller diameter than the first gas line 250 and has a smaller flow passage area. This inhibits a reversed flow of the gas vaporized in the first evaporation unit 240 toward the first condensation unit 210. The refrigerant in the first thermal siphon 200 is turned into a liquid in the first condensation unit 210 and is reduced in volume. Therefore, no trouble is created in the distribution of the refrigerant even if the first liquid line 220 is configured to have a small diameter. The entirety of the first thermal siphon 200 may be formed by a pipe of the same inner diameter and the flow passage area of the first liquid line 220 may be reduced by extending a core through the pipe.

The first evaporation unit 240 is configured to be capable of exchanging heat with the interior of the storage chamber 500. For example, the first evaporation unit 240 is mounted on the outer wall surface of the storage chamber 500. The refrigerant flowing into the first evaporation unit 240 absorbs heat from the interior of the storage chamber 500 and evaporates. Evaporation of the refrigerant cools the interior of the storage chamber 500. The first evaporation unit 240 is capable of cooling the interior of the storage chamber 500 to about -90°C ∼ -80°C.

One end of the first gas line 250 is connected to the first evaporation unit 240. The other end of the first gas line 250 is connected to the first condensation unit 210. The refrigerant turned into a gas in the first evaporation unit 240 flows into the first condensation unit 210 via the first gas line 250. The refrigerant is cooled in the first condensation unit 210 and is turned into a liquid again.

The interior of the storage chamber 500 is cooled to a temperature of about -150°C while the refrigerant circuit 400 is operating normally. For this reason, the refrigerant does not evaporate in first evaporation unit 240. Therefore, the circulation of the refrigerant in the first thermal siphon 200 is stopped. Meanwhile, when an abnormality is caused in the operation of the refrigerant circuit 400 due to, for example, a failure in the compressor 402 of the refrigerant circuit 400 and the temperature in the storage chamber 500 rises accordingly, the refrigerant starts to evaporate in the first evaporation unit 240. This starts the circulation of the refrigerant in the first thermal siphon 200. As a result, the temperature in the storage chamber 500 is maintained at -90°C ∼ -80°C by the first thermal siphon 200.

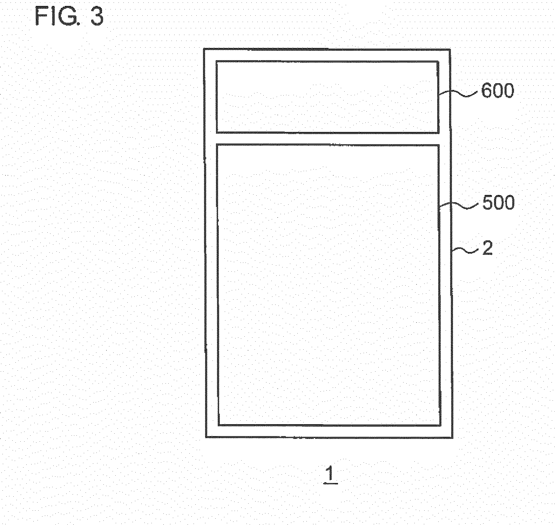

Fig. 3 is a front view schematically showing the appearance of the refrigeration device 1 according to the embodiment. The refrigeration device 1 includes an adiabatic box 2 with an open front, a storage chamber 500, and a machine room 600. For example, frozen food, living tissues, specimens, etc. are stored in the storage chamber 500. The regenerative refrigerator 100, the compressor 402, etc. are installed in the machine room 600.

In this embodiment, the machine room 600 is located above the storage chamber 500 in the adiabatic box 2. This allows the first condensation unit 210 thermally in contact with the heat absorption portion 160 of the regenerative refrigerator 100 to be placed vertically above the first evaporation unit 240 thermally in contact with the storage chamber 500. This can deliver the refrigerant turned into a liquid in the first condensation unit 210 to first evaporation unit 240 easily under gravity. This also facilitates the movement of the refrigerant turned into a gas in the first evaporation unit 240 to the first condensation unit 210. Therefore, the refrigerant can be smoothly circulated in the first thermal siphon 200.

Further, the second condensation unit 310 of the second thermal siphon 300 is placed vertically above the second evaporation unit 340 in the machine room 600. For example, the regenerative refrigerator 100 is oriented and installed such that the heat absorption portion 160 is located toward the top and the condenser 404 is placed vertically below the heat absorption portion 160. This can deliver the refrigerant turned into a liquid in the second condensation unit 310 to the second evaporation unit 340 easily under gravity. This also facilitates the movement of the refrigerant turned into a gas in the second evaporation unit 340 to the second condensation unit 310. Therefore, the refrigerant can be smoothly circulated in the second thermal siphon 300.

As described above, the refrigeration device 1 according to the embodiment includes the refrigerant circuit 400 and the regenerative refrigerator 100. The refrigerant in the condenser 404 is condensed by exchanging heat between the condenser 404 of the refrigerant circuit 400 and the heat absorption portion 160 of the regenerative refrigerator 100. In essence, the refrigeration device 1 is configured such that the high-temperature side refrigerant circuit in the related-art binary refrigeration device is replaced by the regenerative refrigerator 100. With this, the structure of the refrigeration device is simplified as compared to the related-art binary refrigeration device.

In the related-art binary refrigeration device, the high-temperature side refrigerant circuit cools the refrigerant in the low-temperature side refrigerant circuit to about -40°∼ -35°C. By way of contrast, the regenerative refrigerator 100 is capable of cooling the refrigerant to about -60° ∼ -40°C according to the embodiment. For this reason, the number of intermediate heat exchangers provided in the refrigerant circuit 400, which corresponds to the low-temperature side refrigerant circuit of the related-art binary refrigeration device, can be reduced. The structure of the refrigeration device can be simplified also in this respect. It is also possible to simplify the composition of the refrigerant.

The refrigeration device 1 according to the embodiment is provided with the first thermal siphon 200. The refrigeration device 1 is configured such that the storage chamber 500 can be cooled not only by the evaporator 408 of the refrigerant circuit 400 but also by the first evaporation unit 240 of the first thermal siphon 200. The related-art binary refrigeration device does not function as a refrigerant circuit only with the high-temperature side refrigerant circuit or only with the low-temperature side refrigerant circuit. For this reason, the storage chamber cannot be cooled if a failure occurs in one of the refrigerant circuits. By way of contrast, the refrigeration device 1 according to the embodiment is capable of cooling the interior of the storage chamber 500 to a certain degree by the first thermal siphon 200 even if a failure occurs in the refrigerant circuit 400. Accordingly, the reliability of the refrigeration device 1 is improved.

The invention is not limited to the embodiment described above and various modifications such as design changes may be made based on the knowledge of a skilled person, and the modified embodiments are also within the scope of the present invention. New embodiments created by modifying the embodiment described above will provide the combined advantages of the embodiment and the variation.

### (Variation 1)

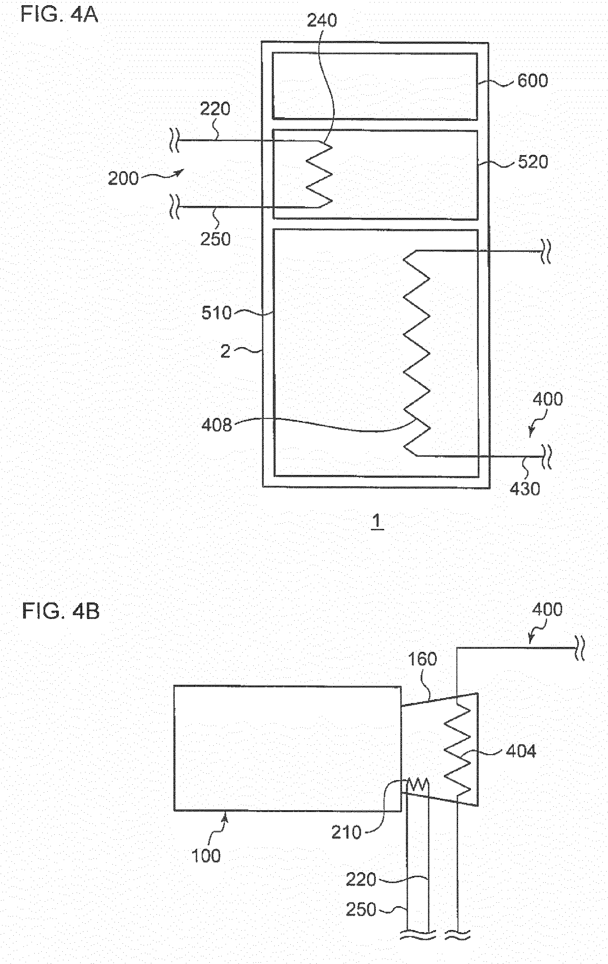

Fig. 4A is a front view schematically showing the appearance of the refrigeration device 1 according to variation 1. The refrigeration device 1 according to variation 1 includes an adiabatic box 2, a first storage chamber 510, a second storage chamber 520, and a machine room 600. For example, the first storage chamber 510 and the second storage chamber 520 are mutually thermally insulated. The first storage chamber 510 is cooled by the evaporator 408 of the refrigerant circuit 400. Meanwhile, the second storage chamber 520 is cooled by the first thermal siphon 200. In essence, heat is exchanged between the first condensation unit 210 (see Fig. 1) of the first thermal siphon 200 and the heat absorption portion 160 of the regenerative refrigerator 100 (see Fig. 1) and the refrigerant in the first condensation unit 210 is cooled and condensed accordingly. Evaporation of the refrigerant in the first evaporation unit 240 cools the interior of the second storage chamber 520.

With this configuration, two storage chambers that differ in inside temperature can be provided in the refrigeration device 1 so that the convenience of the refrigeration device 1 can be improved. Further, even if a failure occurs in the refrigerant circuit 400, the first thermal siphon 200 can continue to cool the second storage chamber 520. Accordingly, the reliability of the refrigeration device 1 can be improved.

### (Variation 2)

Fig. 4B schematically shows the neighborhood of the condenser 404 in the refrigerant circuit of the refrigeration device 1 according to variation 2. In the refrigeration device 1 according to variation 2, the heat absorption portion 160 of the regenerative refrigerator 100 is directly in contact with the condenser 404 of the refrigerant circuit 400. In essence, the heat absorption portion 160 and the condenser 404 exchange heat without mediation by the second thermal siphon 300. The configuration provides the same advantage as the embodiment. By omitting the second thermal siphon 300, the structure of the refrigeration device 1 is further simplified.

### [DESCRIPTION OF THE REFERENCE NUMERALS]

1 refrigeration device, 100 regenerative refrigerator, 110 chamber, 120 movable member, 140 movable member, 150 heat dissipation portion, 160 heat absorption portion, 200 first thermal siphon, 210 first condensation unit, 240 first evaporation unit, 300 second thermal siphon, 310 second condensation unit, 340 second evaporation unit, 400 refrigerant circuit, 402 compressor, 404 condenser, 408 evaporator, 500 storage chamber, 510 first storage chamber, 520 second storage chamber

### [INDUSTRIAL APPLICABILITY]

The application can be applicable to refrigeration devices.

## Claims

1. A refrigeration device (1) comprising:
a refrigerant circuit (400) in which a compressor (402), a condenser (404), a decompressor (406), and an evaporator (408) are connected circularly in the stated order; and
a regenerative refrigerator (100) including a heat dissipation portion (150) that compresses a working fluid enclosed in a chamber (110) and dissipates heat produced by compression, and a heat absorption portion (160) in which the working fluid compressed in the heat dissipation portion (150) is expanded, wherein
a refrigerant in the condenser (404) is cooled by heat exchange between the condenser (404) and the heat absorption portion (160),
**characterized in that** the refrigeration device (1) further comprising:
a first thermal siphon (200) including a first condensation unit (210) and a first evaporation unit (240); and
a storage chamber (500) cooled by each of the evaporator (408) and the first evaporation unit (240), wherein
a refrigerant in the first condensation unit (210) is cooled and condensed by heat exchange between the first condensation unit (210) and the heat absorption portion (160), and
the storage chamber (500) is cooled by evaporation of the refrigerant in the first evaporation unit (240).

2. A refrigeration device (1) comprising:
a refrigerant circuit (400) in which a compressor (402), a condenser (404), a decompressor (406), and an evaporator (408) are connected circularly in the stated order; and
a regenerative refrigerator (100) including a heat dissipation portion (150) that compresses a working fluid enclosed in a chamber (110) and dissipates heat produced by compression, and a heat absorption portion (160) in which the working fluid compressed in the heat dissipation portion (150) is expanded, wherein
a refrigerant in the condenser (404) is cooled by heat exchange between the condenser (404) and the heat absorption portion (160),
**characterized in that** the refrigeration device (1) further comprising:
a first thermal siphon (200) including a first condensation unit (210) and a first evaporation unit (240);
a first storage chamber (510) cooled by the evaporator (408); and
a second storage chamber (520) cooled by the first evaporation unit (240), wherein
a refrigerant in the first condensation unit (210) is cooled and condensed by heat exchange between the first condensation unit (210) and the heat absorption portion (160), and
the second storage chamber (520) is cooled by evaporation of the refrigerant in the first evaporation unit (240).

3. The refrigeration device (1) according to claims 1 or 2, further comprising:
a second thermal siphon (300) including a second condensation unit (310) and a second evaporation unit (340), wherein
a refrigerant in the second condensation unit (310) is cooled and condensed by heat exchange between the second condensation unit (310) and the heat absorption portion (160), and
the refrigerant in the condenser (404) is cooled by heat exchange between the second evaporation unit (340) and the condenser (404).

4. The refrigeration device (1) according to claims 1 or 2, wherein the heat absorption portion (160) is directly in contact with the condenser (404).

5. The refrigeration device (1) according to one of claims 1 through 4, wherein the regenerative refrigerator (100) is a Stirling refrigerator.

## Patentansprüche

1. Kältevorrichtung (1), die umfasst:
einen Kältemittelkreislauf (400), in dem ein Kompressor (402), ein Kondensator (404), ein Dekompressor (406) und ein Verdampfer (408) in der angegebenen Reihenfolge kreisförmig verbunden sind; und
eine regenerative Kältemaschine (100) mit einem Wärmeableitungsteil (150), das ein in einer Kammer (110) eingeschlossenes Arbeitsfluid komprimiert und die durch Kompression erzeugte Wärme ableitet, und einem Wärmeabsorptionsteil (160), in dem das im Wärmeableitungsteil (150) komprimierte Arbeitsfluid expandiert wird, wobei
ein Kältemittel in dem Kondensator (404) durch Wärmeaustausch zwischen dem Kondensator (404) und dem Wärmeabsorptionsteil (160) gekühlt wird,
**dadurch gekennzeichnet, dass** die Kältevorrichtung (1) des Weiteren umfasst:
einen ersten Thermosiphon (200) mit einer ersten Kondensationseinheit (210) und einer ersten Verdampfungseinheit (240) und
eine Speicherkammer (500), die jeweils durch den Verdampfer (408) und die erste Verdampfungseinheit (240) gekühlt wird, wobei
ein Kältemittel in der ersten Kondensationseinheit (210) durch Wärmeaustausch zwischen der ersten Kondensationseinheit (210) und dem Wärmeabsorptionsteil (160) gekühlt und kondensiert wird und
die Speicherkammer (500) durch Verdampfen des Kältemittels in der ersten Verdampfungseinheit (240) gekühlt wird.

2. Kältevorrichtung (1), die umfasst:
einen Kältemittelkreislauf (400), in dem ein Kompressor (402), ein Kondensator (404), ein Dekompressor (406) und ein Verdampfer (408) in der angegebenen Reihenfolge kreisförmig verbunden sind; und
eine regenerative Kältemaschine (100) mit einem Wärmeableitungsteil (150), das ein in einer Kammer (110) eingeschlossenes Arbeitsfluid komprimiert und durch Kompression erzeugte Wärme ableitet, und einem Wärmeabsorptionsteil (160), in dem das im Wärmeableitungsteil (150) komprimierte Arbeitsfluid expandiert wird, wobei
ein Kältemittel in dem Kondensator (404) durch Wärmeaustausch zwischen dem Kondensator (404) und dem Wärmeabsorptionsteil (160) gekühlt wird,
**dadurch gekennzeichnet, dass** die Kältevorrichtung (1) des Weiteren umfasst:
einen ersten Thermosiphon (200) mit einer ersten Kondensationseinheit (210) und einer ersten Verdampfungseinheit (240);
eine erste Speicherkammer (510), die durch den Verdampfer (408) gekühlt wird; und
eine zweite Speicherkammer (520), die durch die erste Verdampfungseinheit (240) gekühlt wird, wobei
ein Kältemittel in der ersten Kondensationseinheit (210) durch Wärmeaustausch zwischen der ersten Kondensationseinheit (210) und dem Wärmeabsorptionsteil (160) gekühlt und kondensiert wird und
die zweite Speicherkammer (520) durch Verdampfen des Kältemittels in der ersten Verdampfungseinheit (240) gekühlt wird.

3. Kältevorrichtung (1) nach den Ansprüchen 1 oder 2, die des Weiteren umfasst:
einen zweiten Thermosiphon (300) mit einer zweiten Kondensationseinheit (310) und einer zweiten Verdampfungseinheit (340), wobei
ein Kältemittel in der zweiten Kondensationseinheit (310) durch Wärmeaustausch zwischen der zweiten Kondensationseinheit (310) und dem Wärmeabsorptionsteil (160) gekühlt und kondensiert wird und
das Kältemittel in dem Kondensator (404) durch Wärmeaustausch zwischen der zweiten Verdampfungseinheit (340) und dem Kondensator (404) gekühlt wird.

4. Kältevorrichtung (1) nach den Ansprüchen 1 oder 2, wobei sich das Wärmeabsorptionsteil (160) mit dem Kondensator (404) direkt in Kontakt befindet.

5. Kältevorrichtung (1) nach einem der Ansprüche 1 bis 4, wobei die regenerative Kältemaschine (100) eine Stirling-Kältemaschine ist.

## Revendications

1. Dispositif frigorifique (1) comprenant :
un circuit de réfrigérant (400) dans lequel un compresseur (402), un condensateur (404), un détendeur (406) et un évaporateur (408) sont connectés de manière circulaire dans l'ordre indiqué ; et
un réfrigérateur à régénération (100) comprenant une portion de dissipation de chaleur (150) qui compresse un fluide de travail enfermé dans une chambre (110) et dissipe la chaleur produite par compression, et une portion d'absorption de chaleur (160) dans laquelle le fluide de travail compressé dans la portion de dissipation de chaleur (150) est détendu, dans lequel
un réfrigérant dans le condensateur (404) est refroidi par échange de chaleur entre le condensateur (404) et la portion d'absorption de chaleur (160),
**caractérisé en ce que** le dispositif frigorifique (1) comprend en outre :
un premier siphon thermique (200) comprenant une première unité de condensation (210) et une première unité d'évaporation (240) ; et
une chambre de stockage (500) refroidie par chaque élément parmi l'évaporateur (408) et la première unité d'évaporation (240), dans lequel
un réfrigérant dans la première unité de condensation (210) est refroidi et condensé par échange de chaleur entre la première unité de condensation (210) et la portion d'absorption de chaleur (160), et
la chambre de stockage (500) est refroidie par évaporation du réfrigérant dans la première unité d'évaporation (240).

2. Dispositif frigorifique (1) comprenant :
un circuit de réfrigérant (400) dans lequel un compresseur (402), un condensateur (404), un détendeur (406) et un évaporateur (408) sont connectés de manière circulaire dans l'ordre indiqué ; et
un réfrigérateur à régénération (100) comprenant une portion de dissipation de chaleur (150) qui compresse un fluide de travail enfermé dans une chambre (110) et dissipe la chaleur produite par compression, et une portion d'absorption de chaleur (160) dans laquelle le fluide de travail compressé dans la portion de dissipation de chaleur (150) est détendu, dans lequel
un réfrigérant dans le condensateur (404) est refroidi par échange de chaleur entre le condensateur (404) et la portion d'absorption de chaleur (160),
**caractérisé en ce que** le dispositif frigorifique (1) comprend en outre :
un premier siphon thermique (200) comprenant une première unité de condensation (210) et une première unité d'évaporation (240) ;
une première chambre de stockage (510) refroidie par l'évaporateur (408) ; et
une deuxième chambre de stockage (520) refroidie par la première unité d'évaporation (240), dans lequel
un réfrigérant dans la première unité de condensation (210) est refroidi et condensé par échange de chaleur entre la première unité de condensation (210) et la portion d'absorption de chaleur (160), et
la deuxième chambre de stockage (520) est refroidie par évaporation du réfrigérant dans la première unité d'évaporation (240).

3. Dispositif frigorifique (1) selon la revendication 1 ou 2, comprenant en outre :
un deuxième siphon thermique (300) comprenant une deuxième unité de condensation (310) et une deuxième unité d'évaporation (340), dans lequel
un réfrigérant dans la deuxième unité de condensation (310) est refroidi et condensé par échange de chaleur entre la deuxième unité de condensation (310) et la portion d'absorption de chaleur (160), et
le réfrigérant dans le condensateur (404) est refroidi par échange de chaleur entre la deuxième unité d'évaporation (340) et le condensateur (404).

4. Dispositif frigorifique (1) selon la revendication 1 ou 2, dans lequel la portion d'absorption de chaleur (160) est directement en contact avec le condensateur (404).

5. Dispositif frigorifique (1) selon l'une des revendications 1 à 4, dans lequel le réfrigérateur à régénération (100) est un réfrigérateur Stirling.
